# EUROPEAN PATENT SPECIFICATION

(11) **EP 2 690 078 B1**
(45) Date of publication and mention of the grant of the patent: **09.05.2018**
(21) Application number: 12290259.6
(22) Date of filing: 27.07.2012
(51) Int. Cl.: C04B 28/02, C04B 28/04, C04B 35/101, C04B 35/18

(54) **REFRACTORY COMPOSITION AND METHOD OF INSTALLATION**
FEUERFESTE ZUSAMMENSETZUNG UND VERFAHREN ZUM EINSATZ
COMPOSITION RÉFRACTAIRE ET PROCÉDÉ D'INSTALLATION

(43) Date of publication of application: 29.01.2014
(73) Proprietor: Calderys France, 92446 Issy-les-Moulineaux (FR)
(72) Inventor: Malkmus, Patrick, 56075 Koblenz (DE); Sourdier, Jérome, 01150 Vaux en Bugey (FR)
(74) Representative: Johnston, Magnus George

(56) References cited:
- EP-A1- 0 425 086
- EP-A1- 2 565 173
- US-A- 4 780 142
- US-A- 5 932 506

## Description

### TECHNICAL FIELD

The present invention is directed to a gunnable refractory composition, a method of installing a factory lining by gunning the gunnable refractory composition, to a refractory lining obtained by the installation method, and to a precursor refractory composition formable into the gunnable refractory composition upon mixing with an appropriate amount of water.

### BACKGROUND OF THE INVENTION

It is desirable to be able to install refractory linings as quickly as possible and without adversely affecting the quality of the installed lining following installation, drying and firing. Techniques, such as gunning, have been developed to address this need. More recently, workers in this field have focussed on the composition and properties of the refractory being installed and there is ongoing drive to develop new compositions which dry-out faster than conventional refractory materials, such as those comprising relatively high amounts of cementitious binder. There is an ongoing need for new refractory materials which can be installed by gunning methods and which dry-out quickly following installation. US4780142 discloses a gunning composition comprising 3-30% fumed silica, 0.2-5% sodium silicate (SiO2:Na2O) and refractory aggregates comprising alumina or bauxite. This composition is mixed with a suitable amount of water for dry-gunning. The composition is substantially free of calcarous cement.

### SUMMARY OF THE INVENTION

In accordance with a first aspect, there is provided a gunnable refractory composition according to claim 1. The gunnable refractory composition may have a permeability at 20°C, following drying at 50°C for 48 hours, of at least about 250 x 10⁻¹⁶ m².

In accordance with a second aspect, there is provided a method of installing a refractory lining, comprising: gunning a refractory composition according to the first aspect of the present invention to form a refractory lining, followed by setting and drying the lining, and optionally firing the lining.

In accordance with a third aspect, there is provided refractory lining obtainable by the method according to the second aspect of the present invention.

In accordance with a fourth aspect, there is provided a precursor refractory composition comprising:
at least about 50 % by weight of alumina, aluminosilicate, or mixtures thereof, based on the total dry weight of the gunnable refractory composition;
about 0.5 to about 10 % by weight of alkaline earth metal oxide and/or hydroxide, based on the total dry weight of the gunnable refractory composition;
about 2 to about 10 % by weight of silica having a surface area of at least about 10 m²/g, based on the total dry weight of the gunnable refractory composition; and
no more than about 0.5% by weight of cementitious binder, based on the total dry weight of the gunnable refractory composition.

The precursor refractory composition is formable into a gunnable refractory composition according to the first aspect of the present invention upon mixing with from about 1-150 % by weight water, based on the total dry weight of the precursor refractory composition.

### BRIEF DESCRIPTION OF THE DRAWINGS

Figure 1 is a schematic depiction of the measurement procedure for measuring evolution of hydrogen gas from a wetted gunnable refractory composition.
Figure 2 is a schematic representation of a gunning lance that may be utilised in embodiments of the present invention.
Figure 3 shows in detail an exploded view of a gunning lance that may be utilised in embodiments of the present invention.
Figures 4A, 4B and 4C depict variants of the nozzle region of the gunning lance that may be utilised in embodiments of the present invention.
Figure 5 shows an exploded view of another embodiment of a gunning lance that may be utilised in the method of the present invention.
Figure 6 is a graph summarising weight loss as a function of temperature for a composition according to the invention and a series of comparative compositions.
Figure 7 is a graph summarising weight loss as a function of temperature for a composition according to the invention and a series of comparative compositions.
Figure 8 is a schematic depiction of a cross-section through an assembly for measuring permeability.

### DETAILED DESCRIPTION OF THE INVENTION

In accordance with first aspect stated above, there is provided a gunnable refractory composition. By 'gunnable' is meant that the refractory composition is installable by gunning. In certain embodiment, the gunnable refractory composition is formable into a joint-less or unshaped product upon addition of water, installation, setting and drying.

The gunnable refractory composition comprises at least about 50 % by weight of alumina, aluminosilicate, or mixtures thereof, based on the total dry weight of the refractory composition. In an embodiment, the refractory composition comprises about 50-99 % by weight, for example, about 50-95% by weight, for example about, from about 50-90 % by weight, or from about 50-85 % by weight, or from about 50-80 % by weight, or from about 50-75 % by weight, or from about 50-70 % by weight, from about 50-65 % by weight, or from about 50-60 % by weight, for example about 55-75 % by weight, or from about 60-80 % by weight, or from about 60-75 % by weight, or from about 60-70 % by weight, or from about 70-99 % by weight, or from about 75-99 % by weight, or from about 80-99 % by weight, or from about 85-99 % by weight, or from about 85 to about 95 % by weight of alumina, aluminosilicate, or mixtures thereof.

The alumina, aluminosilicate or mixtures thereof may comprise a material selected from brown fused alumina, sintered alumina, white fused alumina, calcined alumina, reactive or semi-reactive alumina, bauxite, fused or sintered mullite, andalusite and calcined chamotte having an alumina content of about 30 to 75 % by weight.

The alumina, aluminosilicate or mixtures thereof may comprise, consist essentially of, or consist of particles up to about 30 mm in size, as determined by an appropriately sized sieve. In embodiments, the alumina, aluminosilicate or mixtures thereof comprises, consists essentially of, or consists of particles up to about 10 mm, or up to about 6 mm, or up to about 4 mm, or up to about 2 mm, or up to about 1 mm in size.

In embodiments in which the gunnable refractory composition comprises up to about 15 % by weight calcined alumina, based on the total dry weight of the gunnable refractory composition, the calcined alumina may comprise particles having a d₅₀ of up to about 100 µm, for example, up to about 50 µm, or for example, between about 1 to about 10 µm. Calcined alumina may be included as a component to adjust or enhance the flow characteristics of the gunnable composition once mixed with water. It may also be included to control and adjust the particle size distribution of the entire mix. In certain embodiments, the gunnable refractory composition comprises from about 1 to about 10 % by weight calcined alumina, for example, from about 1 to about 5 % by weight calcined alumina.

In certain embodiments, the gunnable refractory composition comprises from about 50-95 % by weight bauxite, based on the total dry weight of the refractory composition, for example, from about 55-90 % by weight, or from about 60-90 % by weight, or from about 65-90 % by weight, or from about 70-90 % by weight, or from about 75-90 % by weight, or from about 80-90 % by weight, or from about 85-95 % by weight bauxite. The bauxite may comprise particles having a maximum particle size of up to about 10 mm, for example, up to about 8 mm, or up to about 6 mm, or up to about 4 mm, or up to about 2 mm, as determined by an appropriately sized sieve. In certain embodiments, the bauxite will generally have a d₅₀ of at least about 50 µm, for example, at least about 100 µm, or at least about 150 µm, or at least about 200 µm, or at least about 250 µm. Bauxite is a relatively porous source of alumina matrix for refractory compositions and, thus, may be used advantageously in the present invention because its porosity captures water added during installation, which in turn enables installation of a relatively stiff lining.

Unless otherwise stated, the mean (average) equivalent particle diameter (d₅₀ value) referred to herein is as measured in a well known manner by sedimentation of the particulate material in a fully dispersed condition in an aqueous medium using a Sedigraph 5100 machine as supplied by Micromeritics Instruments Corporation, Norcross, Georgia, USA (web-site: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (esd), less than given esd values. The mean particle size d₅₀ is the value determined in this way of the particle esd at which there are 50% by weight of the particles which have an equivalent spherical diameter less than that d₅₀ value.

In certain embodiments, the gunnable refractory composition comprises from about 40-90 % by weight andalusite, based on the total dry weight of the refractory composition, for example, from about 40-80 % by weight, or from about 40-70 % by weight, or from about 45-70 % by weight, or from about 45-60 % by weight, or from about 50-60 % by weight andalusite. The andalusite may comprise particles having a maximum particle size of up to about 10 mm, for example, up to about 8 mm, or up to about 6 mm, or up to about 4 mm, or up to about 2 mm, as determined by an appropriately sized sieve. In certain embodiments, the andalusite will generally have a d₅₀ of at least about 50 µm, for example, at least about 100 µm, or at least about 150 µm, or at least about 200 µm, or at least about 250 µm.

In certain embodiments, for example, embodiments in which the gunnable refractory composition comprises andalusite, the gunnable refractory composition comprises up to about 40 % by weight chamotte, based on the total dry weight of the refractory composition, for example, from about 5-40 % by weight, for from about 10-35 % by weight, or from about 15-30 % by weight, from about 15-25 % by weight chamotte. The chamotte may comprise particles having a maximum particle size of up to about 10 mm, for example, up to about 8 mm, or up to about 6 mm, or up to about 4 mm, or up to about 2 mm, as determined by an appropriately sized sieve. In certain embodiments, the chamotte will generally have a d₅₀ of at least about 50 µm, for example, at least about 100 µm, or at least about 150 µm, or at least about 200 µm, or at least about 250 µm.

In certain embodiments, the gunnable refractory composition comprises up to about 15 % by weight reactive or semi reactive alumina, based on the total dry weight of the refractory composition. The reactive or semi reactive alumina may comprise particles having a maximum particle size of up to about 50 µm, for example, up to about 25 µm or for example, a d₅₀ between about 0.5 to 5 µm. Reactive or semi reactive alumina may be included as a component to adjust or enhance the flow characteristics of the gunnable composition once mixed with water. It may also be included to control and adjust the particle size distribution of the entire mix.

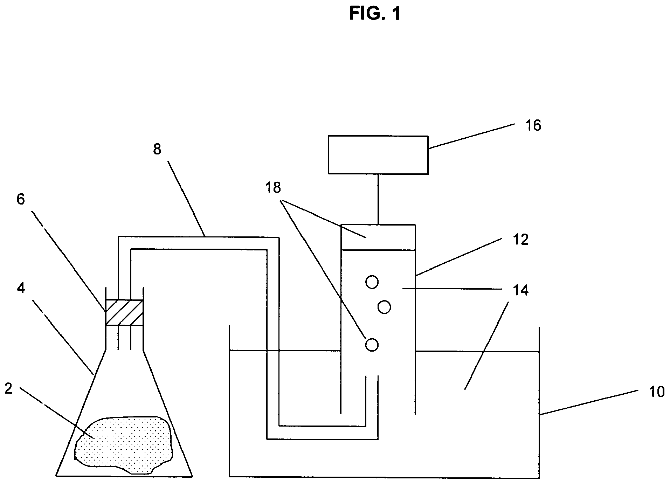

In certain embodiments, the gunnable refractory composition does not release a significant amount of hydrogen gas upon addition of water. By "does not release a significant amount of hydrogen gas upon addition of water" is meant that in accordance with the following measurement procedure, the gunnable refractory composition directly following mixing with water produces less than 25 cm³ of hydrogen gas per kilogram of wetted gunnable refractory composition, i.e., hydrogen gas emission is less than about 25 cm³ H₂/kg of wetted gunnable refractory composition, for example, less than about 15 cm³ H₂/kg or, for example, less than about 10 cm³ H₂/kg of wetted gunnable refractory composition. In an embodiment, hydrogen emission is not detectable as measured in accordance with the following procedure, described with reference to Fig. 1.

Directly after mixing the gunnable refractory composition with water, in accordance with EN 1402, approximately 300 g of the resulting wet product (2) is precisely weighed and placed into a sealable recipient (4). The recipient (4) is sealed with a suitable sealing means (e.g., a rubber stopper) and is connected via a tube (8) to a vessel (10) and column (12) containing water (14). The water column (12, 14) is continuously weighed by suitable weighing means (16). The temperature is 20°C and the pressure is 1 atm and kept constant during the procedure. If hydrogen gas (18) is emitted, the gas (18) will displace water (14) from the column (12). The weight loss of the water column (12, 14) is used to calculate the cumulative hydrogen gas emission over a period of 72 hours expressed in cm³ of hydrogen gas per kg of wetted gunnable refractory composition.

The gunnable refractory composition may comprise up to about 30 % by weight silicon carbide, for example about 2-25 % by weight silicon carbide, based on the total dry weight of the gunnable refractory composition. In an embodiment, the gunnable refractory composition comprises about 5-20 % by weight, for example about 5-15 % by weight, for example about 5-10 % by weight silicon carbide. In certain embodiments the gunnable refractory composition comprises a combination of andalusite, chamotte and silicon carbide in the amounts described above, for example, silicon carbide in amount of from about 5-15 % by weight, or from about 5-10 % by weight. In other embodiments, the gunnable refractory composition is substantially free of silicon carbide.

The silicon carbide may comprise, consist essentially of, or consist of particles up to about 30 mm in size, as determined by an appropriately sized sieve. In embodiments, the silicon carbide comprises, consists essentially of, or consists of particles up to about 10 mm, or up to about 8 mm, or up to about 6 mm, or up to about 4 mm, or up to about 2 mm, or up to about 1 mm, or up to about 0.5 mm, or up to about 0.2 mm in size. In other embodiments, the silicon carbide comprises, consists essentially of, or consists of particles having a d₅₀ up to about 300 µm. The silicon carbide may comprise, consist essentially of, or consist of particles having a d₅₀ of up to about 200 µm, for example, up to about 100 µm or, for example, a d₅₀ of up to about 60 µm.

The gunnable refractory composition may comprise up to about 30 % by weight spinel (MgAl₂0₄), for example about 2-25 % by weight spinel, based on the total dry weight of the gunnable refractory composition. In an embodiment, the gunnable refractory composition comprises about 5-20 % by weight, for example about 5-15 % by weight, for example about 5-10 % by weight spinel. The spinel may comprise particles having a maximum particle size of up to about 10 mm, for example, up to about 8 mm, or up to about 6 mm, or up to about 4 mm, or up to about 2 mm, as determined by an appropriately sized sieve. In certain embodiments, the spinel will generally have a d₅₀ of at least about 50 µm, for example, at least about 100 µm, or at least about 150 µm, or at least about 200 µm, or at least about 250 µm.

The gunnable refractory composition may comprise up to about 10 % by weight, for example, about 1-10 % by weight carbon, based on the total dry weight of the refractory composition. In an embodiment, the gunnable refractory composition comprises about 1-5 % by weight carbon. The carbon may comprise a material selected from carbon black, graphite, coke, solid hydrocarbon having a carbon residue of at least about 5 % by weight after coking or a combination thereof. In an embodiment, the carbon comprises a mixture of graphite and carbon black.

The graphite may be mono-crystalline or polycrystalline (also known as "amorphous graphite") and may comprise particles of up to about 1 mm in size, as determined by an appropriate sized sieve.

The carbon black may comprise particles having a d₅₀ of up to about 100 µm, for example, up to about 75 µm of, for example, up to about 50 µm. The particles of carbon black may have a maximum specific surface area of about 50 m²/g, as determined by nitrogen adsorption using the BET Specific Surface Area measurement method, and a Loss on Ignition (LOI) at 1000°C of at least 90 % by weight.

The coke may comprise particles of up to about 2 mm in size, as determined by an appropriately sized sieve, and a LOI at 1000°C of at least 80 % by weight.

The solid hydrocarbon may have a carbon residue of at least about 10 % by weight after coking. It may be in a powdered form comprising particles up to about 2 mm in size, as determined by an appropriately sized sieve, or it may be in the form of a coating of aggregates of 0.5 mm or more. Examples of solid hydrocarbons are bitumens, asphalts, phenolic based resins and synthetic polymers or oligomers.

The gunnable refractory composition comprises about 0.1-10 % by weight alkaline earth metal oxide and/or hydroxide, based on the total dry weight of the gunnable refractory composition. The alkaline earth metal oxide and/or hydroxide is a component of the binder on addition of water and during setting. In an embodiment, the gunnable refractory comprises about 0.5-8 % by weight alkaline earth metal oxide and/or hydroxide, for example about 0.5-6 % by weight alkaline earth metal oxide and/or hydroxide, for example about 0.5-4 % by weight alkaline earth metal oxide and/or hydroxide, for example about 0.5-2 % by weight or, for example, about 0.5-1.5 % by weight alkaline earth metal oxide and/or hydroxide. In an embodiment, the alkaline earth metal oxide and/or hydroxide is an oxide and/or hydroxide of magnesium, calcium or barium, or mixtures thereof. In an embodiment, the alkaline earth metal oxide and/or hydroxide is magnesia and/or magnesium hydroxide. In an embodiment, the magnesia comprises, consists essentially of, or consists of partially hydrated magnesium oxide. In another embodiment, the alkaline earth metal oxide and/or hydroxide is calcium hydroxide and/or calcium oxide. In a further embodiment, the alkaline earth metal oxide and/or hydroxide is barium oxide and/or barium hydroxide. The alkaline earth metal oxide and/or hydroxide may comprise, consist essentially or consist of particles having a d₅₀ of less than about 100 µm, for example, a d₅₀ of less than about 75 µm or, for example, a d₅₀ of less than about 50 µm.

The gunnable refractory composition comprises about 1-7 % by weight of silica having a surface area of at least about 10 m²/g, as measured by nitrogen adsorption using the BET Specific Surface Area measurement method. In an embodiment, the gunnable refractory composition comprises about 3-7 % by weight silica or, for example, about 4-6 % by weight silica. The silica may have a surface are of at least about 20 m²/g, for example at least about 50, m²/g, for example at least about 100 m²/g or, for example at least about 200 m²/g. In an embodiment, the surface area of the silica is no more than about 500 m²/g. In embodiment, the silica is selected from the group consisting of fumed silica (also known as pyrogenic silica), silica fume (also known as oxidized silicon vapour), microsilica, micro grinded silica and precipitated silica. The silica having a surface area of at least about 10 m²/g is a component of the binder, along with the alkaline earth metal oxide or hydroxide and water.
The gunnable refractory composition includes no more than about 0.5 % by weight cementitious binder, for example, no more than about 0.5 wt. % calcium aluminate cement and/or calcium silicate cement. In an embodiment, the gunnable refractory composition includes no more than about 0.4 % by weight cementitious binder, for example, no more than about 0.4 % by weight calcium aluminate cement and/or calcium silicate cement. In another embodiment, the gunnable refractory composition includes no more than about 0.3 % by weight cementitious binder, for example, no more than about 0.3 % by weight calcium aluminate cement and/or calcium silicate cement. In another embodiment, the gunnable refractory composition includes no more than about 0.2 % by weight cementitious binder, for example, no more than about 0.2 % by weight calcium aluminate cement and/or calcium silicate cement. In another embodiment, the gunnable refractory composition is substantially free of cementitious binder, for example, substantially free of calcium aluminate cement and/or calcium silicate cement.
Prior to or during gunning the gunnable refractory composition will be combined with water. Thus, the gunnable refractory composition further comprises water. Advantageously, the gunnable refractory composition sets upon addition of an appropriate amount of water. The appropriate amount of water will vary depending on the precise composition of the gunnable refractory composition, its intended use and the gunning method by which the refractory is installed, as described below.

For installation using a dry gunning technique the gunnable refractory composition comprises between about 1 % and 150 % by weight of water based on the total dry weight of the gunnable refractory composition, for example, between about 1 % and about 125 % by weight of water, or between about 1 %and 100 % by weight of water, or between about 1 %and 90 % by weight of water, or between about 1 %and 80 % by weight of water, or between about 1 %and 70 % by weight of water, or between about 1 % and 60 % by weight of water, or between about 1 % and 50 % by weight of water, or between about 1 % and about 40 % by weight of water. In certain embodiments, the gunnable refractory composition is mixed with about 2-30 % by weight of water, for example about 2-20 % by weight of water, or about 2-10 % by weight of water, or about 5-30 % by weight of water, or about 10-30 % by weight of water, or about 2-20 % by weight of water, or about 5-20 % by weight of water, or about 10-20 % by weight of water, or about 2-15 % by weight of water, or about 2-10 % by weight of water or, or about 3-10 % by weight of water, or about 4-10 % by weight of water, or about 5-10 % by weight of water based on the total dry weight of the gunnable refractory composition.

By "dry gunning" is meant a gunning method in which water is added to the refractory at a position which is less than an about one metre before the point at which the wetted refractory composition to be installed exits the gunning apparatus. By contrast, in a "wet-gunning" method the refractory material is wetted with water some metres away from the gunning nozzle and generally relies upon turbulence during conveying of the wetted material for mixing.

It has surprisingly been found that the gunnable refractory composition of the present invention has advantageously high permeability, for example, relative to conventional cement based dry gunning mixtures. Without wishing to be bound by theory, it is believed that the gunnable refractory composition of the present invention has less pore blockage than normal cement based gunning mixes. It is this relatively high permeability that enables quicker drying following installation.

Thus, in certain embodiments, the gunnable refractory composition according to the first aspect of the present invention has a permeability at 20°C, following drying at 50°C for 48 hours, of at least about 250 x 10⁻¹⁶ m². In certain embodiments, the gunnable refractory composition has a permeability of at least about 250 x 10⁻¹⁶ m², or at least about 250 x 10⁻¹⁶ m², or at least about 500 x 10⁻¹⁶ m², or at least about 750 x 10⁻¹⁶ m², or at least about 1000 x 10⁻¹⁶ m², or at least about 1500 x 10⁻¹⁶ m², or at least about 2000 x 10⁻¹⁶ m², or at least about 2500 x 10⁻¹⁶ m², or at least about 3000 x 10⁻¹⁶ m², or at least about 3500 x 10⁻¹⁶ m², or at least about 4000 x 10⁻¹⁶ m², or at least about 4500 x 10⁻¹⁶ m², or at least about 5000 x 10⁻¹⁶ m², or at least about 5500 x 10⁻¹⁶ m², or at least about 6000 x 10⁻¹⁶ m². As noted above, permeability is determined at 20°C, following water addition and drying at 50°C for 48 hours, and measured in accordance with the method described in the Examples below.

As discussed above, the relatively high permeability enables quick drying of the gunned composition. Hence, the gunnable refractory composition may be characterized in terms of water loss (also known as 'dryability') over a given period of time and/or temperature range. Water loss is reported as a percentage of the water added to the gunnable refractory composition during preparation. Water loss may be determined by thermogravimetric analysis in a controlled environment in accordance with the method described in the Examples below. In certain embodiments, the gunnable refractory composition has a water loss of at least about 45 weight %, over a period of 48 hours at 20°C, for example, a water loss at least about 50 weight % over a period of 48 hours at 20°C. Determined over a 72 hour period at 20°C, the gunnable refractory composition may have a water loss of at least about 55 weight %. In further embodiments, the gunnable refractory composition has a water loss of at least about 70 weight % following heating to 40°C over a period of 24 hours. In further embodiments, the gunnable refractory composition has a water loss of at least about 80 weight % following heating to 80 °C over a period of 24 hours, for example, a water loss of at least about 85 weight % following heating to 80°C over a period of 24 hours. In further embodiments. the gunnable refractory composition has a water loss of at least about 85 weight %, for example, at least about 90 weight %, following heating to 150°C over a period of 24 hours. As described, the advantageous dryability of the gunnable refractory composition of the present invention is related to the low level of cementitious binder (in some embodiments, a total absence of cementitious binder), which would otherwise lead to formation of hydrates and/or gels which increase blocking of the pores, and instead reliance on a MO/OH-water-silica bond system (in which MO/OH is an alkaline earth metal oxide and/or hydroxide).

During gunning of the refractory composition, the wetted refractory composition, i.e., the gunnable refractory composition mixed with water in amounts described above, may be combined with a stiffening and rebound modifier, for example, as it passes through the gunning apparatus. Thus, in certain embodiments, the gunnable refractory composition further comprises a stiffening and rebound modifier. In certain embodiments, the stiffening and rebound modifier suppresses or prevents deflocculation (or alternatively enhances flocculation) of the refractory composition during installation. In certain embodiments, there is a visible absence of deflocculation of the refractory composition following installation by gunning. Deflocculation of installed refractory material is undesirable as it can retard or prevent setting and can lead to drop-down of refractory material, particularly if installation involves overhead gunning. Thus, the stiffening and rebound modifier may have the desirable effect of stiffening the installed material such that drop-down is suppressed or eliminated. Further, during gunning the continual impact of gunned material on top of previously gunned material can lead to rebound. Thus, in certain embodiments, the stiffening and rebound modifier suppresses or reduces rebound of the gunned material.

In certain embodiments, the gunnable refractory composition comprises from about 0.01 to about 5 wt. % of a stiffening and rebound modifier, based on the total dry weight of the gunnable refractory composition. In certain embodiments, the gunnable refractory composition comprises from about 0.01 to about 3 wt. % of a stiffening and rebound modifier, for example, from about 0.02 to about 2 wt. %, or from about 0.04 to about 1.5 wt. %, or from about 0.05 to about 1.0 wt. %, or from about 0.06 to about 0.5 wt. %, or from about 0.06 to about 0.2 wt. %, or from about 0.06 to about 0.15 wt. %, or 0.07 to about 0.12 wt. %, or from about 0.07 to about 0.11 wt. %, or from about 0.08 to about 0.10 wt. %, or about 0.06 wt. %, or about 0.07 wt. %, or about 0.08 wt. %, or about 0.09 wt. % or about 0.10 wt. %, or about 0.11 wt. %., or about 0.12 wt. %, or about 0.13 wt. %, or about 0.14 wt. %, or about 0.15 wt. % of stiffening and rebound modifier.

In certain embodiments, the stiffening and rebound modifier is one or more C₁-C₁₀ carboxylic acids or metal salt(s) thereof, for example, one or more C₁-C₄ carboxylic acids or metals salt(s) thereof. The carboxylic acid may be a mono-, di- or tricarboxlyic acid, or combination thereof. The metal of the metal salt may be an alkali (.e.g., Na or K) or alkali earth metal (e.g., Mg or Ca), Al or Zn. For the avoidance of doubt, the stiffening and rebound modifier described herein does not include conventional additives such as, for example, sodium aluminate and citric acid. Thus, in certain embodiments, the stiffening and rebound modifier is other than citric acid and/or sodium aluminate. Further, to the applicant's knowledge, citric acid and/or sodium aluminate have not previously been described for use as a stiffening and rebound modifier.

The gunnable refractory composition may further comprise from about 0.01 to about 3 % by weight solid powdered organic additive, for example, from about 0.05 to about 3 % by weight or, for example, from about 0.05 to about 2 % by weight solid powdered organic additive. These additives may be used as dispersants (e.g., to disperse fine or high specific surface area or hydrophobic components in water and, thus, enable the adjustment of the flow of the refractory composition with minimal water addition) or to adjust the setting time and working time of the refractory one mixed with water. The solid powdered additive may be selected from polyacrylates, polyglycols, polyglycolethers, carboxylic ethers, polymelamines, polynaphthalenes, ethers, citric acid, hydrated citric acid, citrates and mixtures thereof.

The gunnable refractory composition may further comprise from about 0.01 to about 3 % by weight solid soluble mineral additive, for example, from about 0.05 to about 3 % by weight or, for example, from about 0.05 to about 2 % by weight solid soluble additive. These additives may be used as dispersants (e.g., to disperse fine or high specific surface area or hydrophobic components in water and, thus, enable the adjustment of the flow of the gunnable composition with minimal water addition) or to adjust the setting time and working time of the gunnable composition one mixed with water. The solid powdered additive may be selected from sodium phosphate, sodium aluminate, boric acid, calcium silicate, calcium aluminate and mixtures thereof.

The gunnable refractory composition may further comprise up to about 5 % by weight of metallic additives, based on the total dry weight of the gunnable refractory composition. Metallic additives include aluminium, silicon, magnesium, iron, chromium, zirconium, their alloys and mixtures thereof. The metallic additive may be in powdered form. In an embodiment, the gunnable refractory composition comprises less than about 4 % by weight, for example less than about 3 % by weight, for example less than about 2 % by weight, for examples less than about 1 % by weight, for example, less than about 0.75 % by weight, for example, less than about 0.5 % by weight or, for example, less than about 0.25 % by weight of metallic additives. As noted below, in one embodiment, the gunnable refractory composition is substantially free of metallic additives.

Additives may be included in the gunnable refractory composition to suppress or prevent oxidation of carbon. Thus, in an embodiment, the gunnable refractory composition may comprise up to about 5 % by weight of an additive or additives which suppress or prevent oxidation of carbon, based on the total dry weight of the gunnable refractory composition. In an embodiment, the additive is selected from the group consisting of aluminium nitride, aluminium oxy-nitride, boron carbide, zirconium carbide, calcium carbide, metals that include aluminium, silicon, magnesium, iron, chromium, zirconium their alloys, and mixtures thereof. In an embodiment, the additive or additives which suppress or prevent oxidation of carbon is not metallic. In another embodiment, the gunnable refractory composition comprises no more than about 4 % of said additive or additives, for example, no more than about 3 % by weight of said additive or additives, for example, no more than about 2 % by weight of said additive or additives or, for example, no more than about 1% by weight of said additive or additives.

If metallic additives are included which are sufficiently reactive to generate a hydrolysis reaction upon addition of water, evolution of hydrogen gas may be suppressed or prevented by preventing direct contact between water and metal particulates. Direct contact can be avoided by coating the metal particulates with an impervious non-reacting material. The coating may be applied before addition of metal to the gunnable refractory composition or in-situ during preparation of the gunnable refractory composition.

The gunnable refractory composition may further comprise up to about 1.0 % by weight of organic fibres, based on the total dry weight of the gunnable refractory composition. The organic fibres may improve the strength of the composition during setting and drying and suppress or eliminate the appearance of cracks on drying. The organic fibres are eliminated during the firing of the refractory, which leads to the creation of a network of small capillaries which may enhance the evacuation of water. In an embodiment, the refractory gunnable composition comprises up to about 0.8 % by weight of organic fibres, for example, up to about 0.5 % by weight, for example up to about 0.3% by weight, for example up to about 0.2 % by weight or, for example up to about 0.1 %by weight of organic fibres. In other embodiments, the gunnable refractory composition comprises less than about 0.1 % by weight of organic fibres, for example, less than about 0.05 % by weight of organic fibres. Organic fibres include polypropylene, polyacrylonitrile or polyvinylalcohol fibres, natural fibres derived from any suitable source, such as coconuts, wood, grasses (e.g., sugarcane, bamboo) textile waste, cotton, hemp, flax or linen, and combinations thereof. As noted below, in one embodiment, the gunnable refractory composition is substantially free of organic fibres.

As used herein, the term "substantially free" refers to the total absence of or near total absence of a specific compound or composition. For example, when a composition is said to be substantially free of zirconia, there is either no zirconia in the composition or only trace amounts of zirconia in the composition. A person skilled in the art will understand that a trace amount is an amount which may be detectable but not quantifiable and moreover, if present, would not adversely affect the properties of the gunnable refractory composition or article formed therefrom.

Thus, in further embodiments, the gunnable refractory composition is substantially free of one or more of the following species:
(a) zirconia;
(b) zircon sand (zircon silicate)
(c) pitch;
(d) tar;
(e) hydraulically setting reactive alumina substantially free of calcium oxide, known as "hydratable alumina" or p-alumina;
(f) spinel, prior to casting the refractory;
(g) andalusite;
(h) metallic additives, which in the presence of water are capable of hydrolysing to form hydrogen gas; for example, aluminium, silicon, magnesium and magnesium alloys; and
(i) organic fibres (as described above).

In further embodiments, the present invention does not utilise, rely upon or involve one or more of the following bonding systems:
(j) colloidal alumina suspensions and/or colloidal silica suspensions used as liquid addition for preparation of an installable product, permitting the stiffening and setting of the gunnable mixture once installed by destabilisation of the colloidal dispersion and gellification;
(k) acids such as phosphoric acid which react with oxides or hydroxides such as magnesia and alumina or other impurities leading to cross reticulation;
(I) sodium silicate, reacting either with acids (causing setting by gellification of hydroxysilicates), salts (increasing viscosity of silicate solution and gel formation) or alkaline earth metal hydroxides (causing coagulation);
(m)aluminium phosphates hardening at a temperature greater than 100°C or reacting at lower temperature with oxides such as magnesia forming a bond by creation of a Mg and/or P hydrates network ;
(n) polysaccharide-based water soluble polymers;
(o) species which would cause the reticulation, polymerization or co-polymerization of organic components, when present, which are capable of being reticulated, polymerized or co-polymerized in the presence of said species; and
(p) hydration of a reactive alumina substantially free of calcium oxides known as hydratable alumina or ρ-alumina.

### Method of gunning

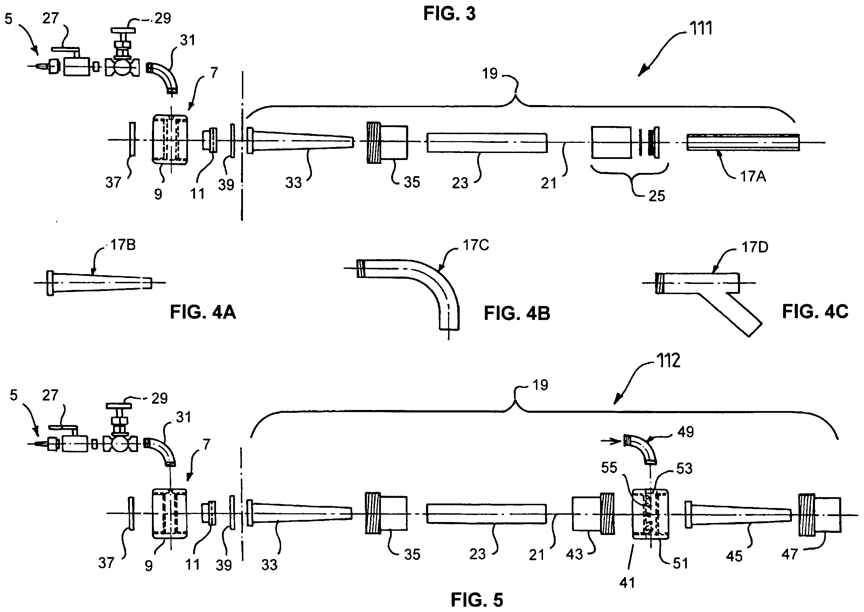

In accordance with the second aspect stated above, the present invention is directed to a method of installing a refractory lining, comprising: gunning a refractory composition according to the first aspect of the present invention to form a refractory lining, followed by setting and drying the lining, and optionally firing the lining.
In certain embodiments, gunning is carried out using a dry gunning technique.
The method may be carried out using any suitable gunning apparatus. Exemplary gunning apparatus include gunning machines manufactured by VELCO (RTM) GmbH.
In certain embodiments, the dry gunning technique is carried out using the gunning apparatus described in FR-A1-2798091 and FR-A1-2798092. This gunning technique is sometimes referred to as low porosity high density gunning because it enables the installation of refractory linings have relatively low porosity and, thus, relatively high density. More particularly, the method may be carried using the gunning apparatus described at page 12, line 27 to page 20, line 3 and depicted in Figures 4, 5, 6, 7, 8A, 8B, 9, 10, 11 and/or 12 of FR-A1-2798091. The method may be carried out using the gunning apparatus described at page 12, line 27 to page 20, line 3 and depicted in Figures 4, 5, 6, 7, 8A, 8B, 9, 10, 11 and/or 12 of FR-A1-2798092.

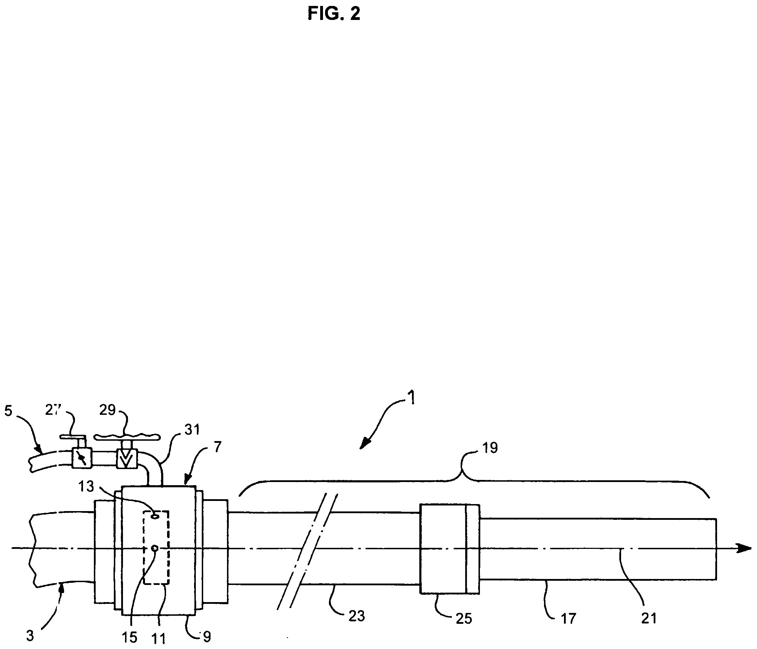

In certain embodiments, the dry gunning technique utilises a gunning apparatus comprising a hopper, dosing system and refractory discharge means. With reference to the illustrative embodiment shown in Figure 2, the refractory discharge means comprises a lance (1) comprising a first pneumatic conduit (3) for conveying the refractory composition in a dry state from said hopper and dosing system, a water transport duct (5) for conveying pressurized water and means for pressurizing at least 8 bar, for example, at least 50 bar, of water in the water transport duct (5), and a water box (7) comprising a container (9) for containing the refractory composition and water. The water transport duct (5) may be equipped with a double valve system comprising a quarter turn valve (27) permitting opening or closing of the water inlet and needle valve (29) for metering the water supply. A part (31) of the water transport duct (5) provided between valves (27) and (29) and the water box (7) may comprise a bent part. Alternatively, the part (31) may be in the form of a flexible hose. The container (9) is in communication with the first pneumatic conduit (3) and water transport duct (5). The water box (7) further comprises a wetting ring (11) disposed about an axis of movement (represented by arrow (21)) of the refractory composition contained in the container (9) and in communication with the water transport duct (2). The wetting ring (11) comprises at least four openings (13, 15), for example, at least about 6 or 8 openings, for circulation and arranged to receive water from the water transport duct (2) and to convey water to the container (9) of the water box (7). The openings (13, 15) may be distributed evenly about the wetting ring (11). The openings (13, 15) may have a diameter of between 0.8 and 12. mm, for example, about 1 mm. Advantageously, the openings (13,15) are substantially perpendicular to the axis of movement of the refractory composition. The lance (1) further comprises a nozzle (17) and a second pneumatic conduit (19) for conveying the wetted refractory composition. The second pneumatic conduit (19) is in communication with the water box and nozzle (17).

In certain embodiments, the second pneumatic conduit (19) comprises a wetting chamber (23) and gland (25) bridging the wetting chamber (23) and nozzle (17). The wetting chamber (23) may be formed of a flexible material, for example, a rubber hose.

In a further embodiment, the lance (1), referenced as (111) in Figure 3, the second pneumatic conduit (19) further comprises a rubber cone (33) which is interposed between the water box (7) and wetting chamber 23. The cone (33) has a diameter decreasing towards wetting chamber (23). The cone (33) may be connected to wetting chamber (33) by a threaded male connector (35). The water box (7) comprises two sealing rings (37, 39) interposed between wetting ring (11) and the first and second pneumatic conduits (3, 23), respectively. Sealing rings (37, 39) provide substantially total sealing of the water box (7) such that water is injected almost exclusively through the openings (13, 15) of the wetting ring (11).

The tip of the nozzle (referenced (17A) in Figure 3) may consist of a small metal tube, for example, an aluminium tube. Alternatively, the nozzle consists of a rubber cone (17B) as shown in Figure 4A, or a metal tube bent at about 90° (1C) as shown in Figure 4B, or a Y-shaped metal tube (17D) as shown in Figure 4C.

In a further embodiment, the lance (1), references as (112) in Figure 5, is equipped with an air box (41) located between the wetting chamber (23) and nozzle (17) (not shown in Fig. 4). The box (41) may be connected to the wetting chamber (23) by a male connector (43) with thread and to the nozzle (not shown) via a cone (45) tapering towards the tip of the nozzle and connected thereto by another male connector (47). The air box (41) is supplied with air by an air conveying conduit (49). The box (41) comprises a container (51) placed in the circuit of the second pneumatic conduit (19) and a ring (53) place in the container (51) and in communication with the air conveying conduit (49). The ring (53) may be provided with air holes (55) for introducing air (e.g., humidified air) into the wetted refractory material to enhance homogeneity of the product. The holes (55) may have a diameter of about 2 mm, or at least greater than about 1.5 mm, and an orientation of 45° to the axis of movement (21) of the wetted refractory material. There may be up to about 16 holes (55). The air box may enable improvements in homogeneity of the wetted refractory material which, in turn, may reduce or eliminate dripping at the end of the nozzle. It may also enable the user to vary, e.g., reduce, the speed of the wetted material at the outlet of the nozzle and, thus, the distance between the lance and target.

Installation using the gunning apparatus comprising the lance described above advantageously enables wetting of the refractory composition with a relatively small amount of water in a very short time. This may be particularly effective in the installation of linings from the gunnable refractory composition of the present invention which are typically quick drying and, thus, require only relatively small amounts of water for setting.

As described above, prior to exiting the gunning apparatus, the gunnable refractory composition is combined with water. The appropriate amount of water will vary depending on the precise composition of the gunnable refractory composition, its intended use and the gunning method by which the refractory is installed, as described below. In certain embodiments, between about 1 % and about 150-% by weight of water may be added to the gunnable refractory composition, for example, between about 1 % and 125 % by weight of water, or between about 1 %and 100 % by weight of water, or between about 1 % and 90 % by weight of water, or between about 1 % and 80 % by weight of water, or between about 1 % and 70 % by weight of water, or between about 1 % and 60 % by weight of water, or between about 1 % and 50 % by weight of water. In certain embodiments, from about 1 % and 40 % by weight of water may be added to the gunnable refractory composition. In certain embodiments, the gunnable refractory composition is mixed with about 2-30 % by weight of water, for example about 2-20 % by weight of water, for example about 2-10 % by weight of water for example about 5-30 % by weight of water, for example about 10-30 % by weight of water, for example about 2-20 % by weight of water, for example about 5-20 % by weight of water, for example about 10-20 % by weight of water, for example about 2-10 % by weight of water or, for example about 3-7 % by weight of water, based on the total dry weight of the gunnable refractory composition.

The gunning apparatus may be regulated at a pressure of at least about 1 bar, for example, at least about 1.5 bar, or at least about 2 bar, or at least about 2.5 bar, or at least about 3 bar. In certain embodiments, the pressure is no more than about 2.5 bar.

The refractory lining may be installed at an installation rate of at least about 1 tonne per hour (based on the total dry weight of the gunnable refractory composition), for example, an instillation rate of at least about 1.5 tonne per hour, or at least about 2 tonne per hour, or at least about 2.5 tonne per hour, or at least about 3 tonne per hour.

When present, the stiffening and rebound modifier (as described above) is mixed with the dry gunning mix prior to gunning.

In certain embodiments, the gunning includes overhead gunning, advantageously in the absence of drop-down of refractory material from the overhead lining being installed.

In certain embodiments, rebound during installation is less than about 10.0 %, for example, less than about 8.0 %, or less than about 6.0%, or less than about 5.5 %, or less than about 5.0 %, or less than about 4.5 %, or less than about 4.0 %. Rebound is determined on a dry basis by comparing the total amount of material gunned and the amount of material that drops down from the gunned surface.

In certain embodiments, the lining is a lining for cupolas hearth and siphon, blast furnaces, main, secondary and tilting runners, vessels or vessel spouts, ladles, tundishes, reaction chambers and troughs that contain, direct the flow or are suitable to facilitate the industrial treatment of liquid metals and slags, or any other high temperature liquids, solids or gases.

In an embodiment, the setting step, during which the installed refractory composition hardens, includes reaction of alkaline earth metal oxide and/or hydroxide, silica having a surface area of at least 10 m²/g (for example, silica fume) and water, without the need for firing.

Setting times range from about 1 hour to about 10 hours, for example, from about 2 hours to 8 hours, for example, from about 3 hours to 7 hours, for example, from about 4 hours to 6 hours or, for example, from about 4 hours to 5 hours.

As described above, the mixture of gunnable refractory composition and water may release less than about 25 cm³ of hydrogen gas per kilogram of the mixture, for example, less than about 15 cm³ H₂/kg of the mixture or, for example, less than about 10 cm³ H₂/kg of the mixture. In an embodiment, hydrogen emission is not detectable by the measurement procedure described herein.

Drying, to reduce or eliminate residual water, is conducted in accordance with conventional procedures, as will be readily apparent to a person of ordinary skill in the art. Typically, drying is conducted in air at a temperature between about ambient e.g., about 20°C) and 800°C during installation.

Firing, i.e. heating the mixture at elevated temperature to produce a ceramic/oxide bond, may be conducted at a temperature greater than about 800°C, for example, equal to or greater than about 900°C, for example, equal to or greater than about 1000°C, for example, equal to or greater than about 1100°C, or example, equal to or greater than about 1200°C, for example, equal to or greater than about 1300°C, for example, equal to or greater than about 1400°C, for example, equal to or greater than about 1500°C or, for example, equal to or greater than about 1600°C.
The viscosity of the mixture of gunnable refractory composition and water may be adjusted by using the soluble powdered organic or soluble mineral additives described above. Such additives, known as dispersing agents, serve to modify particulate surface properties either by direct adsorption on the particulate surface or by modification of water suspension ionic composition.
The present invention is also directed to an installed factory lining obtainable by the method of the second aspect of the present invention. The lining may be a lining for cupolas hearth and siphon, blast furnaces, main, secondary and tilting runners, vessels or vessel spouts, ladles, tundishes, reaction chambers and troughs that contain, direct the flow or are suitable to facilitate the industrial treatment of liquid metals and slags, or any other high temperature liquids, solids or gases.

### EXAMPLES

Two refractory compositions were prepared - composition A and composition B. Details of each composition are given below in Table 1.

A series of comparative refractory compositions were prepared:
- Comparative Comp.1, an andalusite/SiC based refractory comprising 15 wt. % cementitious binder
- Comparative Comp. 2, a bauxite based refractory comprising 15 wt. % cementitious binder
- Comparative Comp. 3, an andalusite based refractory comprising 8 wt. % cementitious binder
- Comparative Comp. 4, a bauxite based refractory comprising 8 wt. % cementitious binder

**Table 1.**

| **Composition A** | | **Composition B** | |
|---|---|---|---|
| *Component* | *Amount (wt. %)* | *Component* | *Amount* |
| Andalusite | 59.17 | Bauxite | 89.67 |
| Chamotte | 23.0 | Fumed silica | 5.0 |
| SiC | 7.5 | Low calcined alumina | 2.5 |
| Fumed silica | 5.0 | Activated bentonite | 1.0 |
| Low calcined alumina | 2.5 | Alkaline earth metal oxide/hydroxide | 1.2 |
| Activated bentonite | 1.0 | hydroxypropyl methyl cellulose low viscosity thickener | 0.01 |
| Alkaline earth metal oxide/hydroxide | 1.2 | Portland cement | 0.2 |
| hydroxypropyl methyl cellulose low viscosity thickener | 0.01 | Na TPP | 0.4 |
| Portland cement | 0.2 | Polypropylene monofilament fibres (17/12) | 0.02 |
| Na TPP | 0.4 | | |
| Polypropylene monofilament fibres (17/12) | 0.02 | | |

### Example 1

The water loss of Compositions A, B and Comparative Comp. 1, 2, 3 and 4 was determined. Water addition is summarized in Table 2.

**Table 2.**

| **Composition** | **Water addition (%)** |
|---|---|
| A | 8 |
| B | 10 |
| Comp. 1 | 8 |
| Comp. 2 | 8 |
| Comp. 3 | 10 |
| Comp. 4 | 8 |

### - thermogravimetric analysis

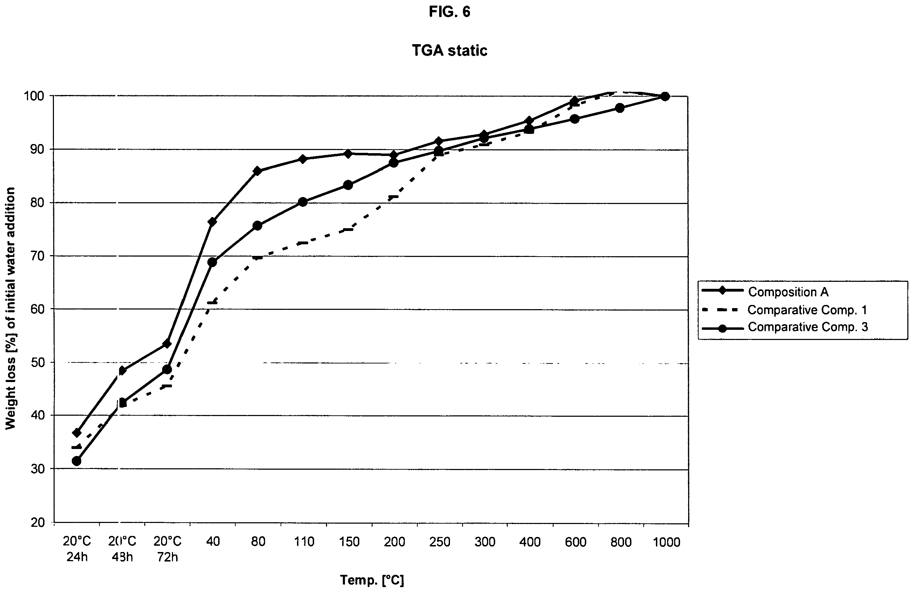

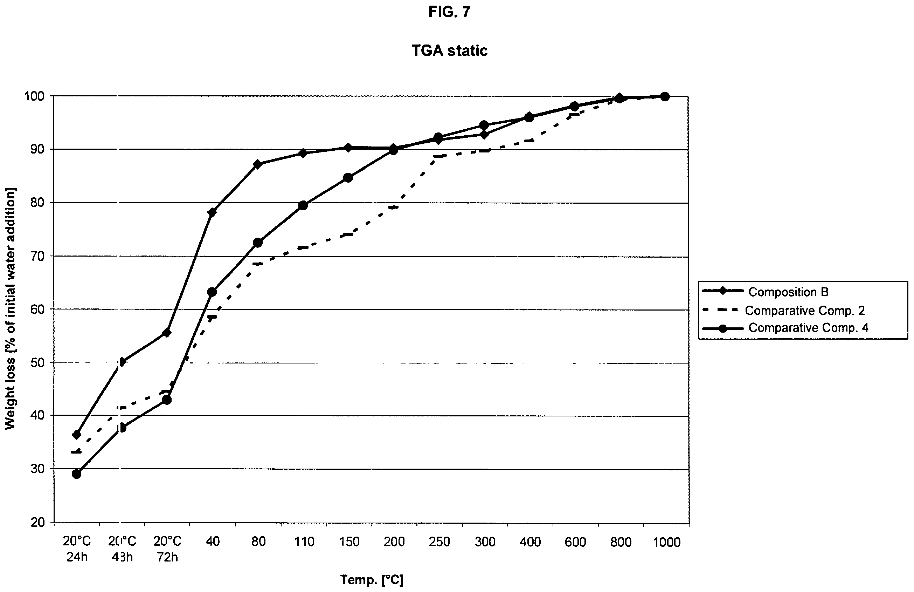

Test bars (two per composition) were cast and sealed after casting with PE-foil so that water release prior to testing was minimized to essentially 0 %. The test bars were weighed directly after demoulding. Test bars were treated in accordance with the temperature/time protocol detailed in Table 4. After each treatment the change in weight was determined. Results are summarized in Figures 6 and 7.

### Example 2

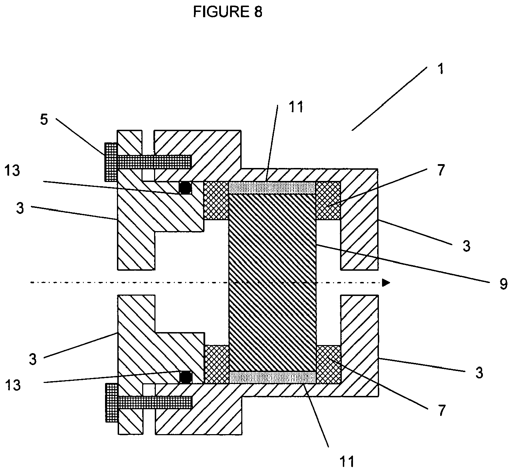

Permeability of the compositions described in Table 3 was tested. Following water addition, each composition was dried at 50°C for up to 48 hours until no further weight changes were measurable. Permeability of each composition was tested at 20°C in accordance with the procedure described in European standard EN 993-4. A schematic depiction (cross-section) of the test assembly is presented in Figure 8. The assembly (1) comprises sample support members (3) which are held together by suitable fixing means (5), e.g., a pair of bolts. Axial flat rubber rings (7) are pressed at 10 N.m over the ground surfaces of the sample (9). The sample is coated with polyester resin (11) prior to testing. The assembly further comprises rubber O-rings (13). Capillary flow-meters (not shown) were used to measure the very small flow going through the samples (9). Rotameters may be used for higher flow rates.

The flow rate of a mixture of nitrogen and oxygen (80% N₂ - 20% O₂) was measured in the steady state for different pressure drops (input pressure between 0.25 x 10⁵ Pa and 0.6 x 10⁵ Pa, output pressure 1.0 x 10⁵ Pa) to check for the flow regime (slip flow, viscous flow or visco-inertial flow). The direction of flow of gas mixture through the assembly and sample is indicated in Figure 8 by the dashed arrow. The relationship between the pressure drop and the measured flow rates was first checked to verify that it can be considered as linear (-> viscous flow regime). A permeability value may thus be calculated from the slope according to the Darcy law. Results are summarized in Table 5.

**Table 5.**

| **Composition** | **Permeability (x 10⁻¹⁶ m²)** |
|---|---|
| A | 2512 |
| B | 6450 |
| Comp. 1 | 74.3 |
| Comp. 2 | 11.3 |
| Comp. 3 | 2.8 |
| Comp. 4 | 1.5 |

### Example 3

Gunning tests with Composition A and B were conducted using gunning apparatus comprising a Velco (RTM) Gun-Mix with low porosity, high density gunning lance (as described above), 20 metres of rubber hose (inner diameter 40 mm, other diameter 60 mm) and a 5 m³ compressor. For all trials pressure at the gunning machine was regulated to 2-2.3 bars. The installation rate was 2.5 tonnes/h. Water addition was about 10-11 % for gunning compositions comprising Composition A and about 11-12 % for gunning compositions comprising Composition B.. Varying amounts of sodium aluminate or a stiffening and rebound modifier were added to the dry gunning mix. Results are summarized in Table 6.

**Table 6.**

| **Comp.** | **Additive** | **Amount of additive (wt. %)** | **Wall** | **Overhead** | **Deflocculation** | **Rebound (%)** |
|---|---|---|---|---|---|---|
| A | Na A | 0.04 | ++ | - | + | 12.50 |
| A | Na A | 0.06 | ++ | + | - | 11.50 |
| A | SRM | 0.04 | +++ | ++ | + | 5.40 |
| A | SRM | 0.06 | ++ | +++ | - | 6.30 |
| A | SRM | 0.1 | +++ | ++ | - | 3.60 |
| A | Na A | 0.1 | ++ | ++ | - | 8.60 |
| A | Na A | 0.12 | n.a. | n.a. | n.a. | n.a. |
| B | SRM | 0.08 | +++ | ++ | - | 4.25 |
| B | SRM | 0.1 | +++ | +++ | - | 5.10 |
| B | Na A | 0.08 | ++ | - | + | 5.0 |

| | | | | | | |
|---|---|---|---|---|---|---|
| Na A = sodium aluminate; SRM = stiffening and rebound modifier; n.a. = not assessed | | | | | | |

Installed material at the wall and overhead was assessed qualitatively, with quality ranging from '-', meaning installation was not possible, to '+++' indicative of the highest quality.

## Claims

1. A gunnable refractory composition comprising:
at least 50 % by weight of alumina, aluminosilicate, or mixtures thereof, based on the total dry weight of the gunnable refractory composition;
0.5 to 10 % by weight of alkaline earth metal oxide and/or hydroxide, based on the total dry weight of the gunnable refractory composition;
1 to 7 % by weight of silica having a surface area of at least 10 m²/g, based on the total dry weight of the gunnable refractory composition;
no more than 0.5% by weight of cementitious binder, based on the total dry weight of the gunnable refractory composition; and
1-150 % by weight water, based on the total dry weight of the gunnable refractory composition;
**characterised in that** the gunnable refractory composition comprises
either from 50-95 % by weight bauxite, based on the total dry weight of the refractory composition,
or from 40-90 % by weight andalusite, based on the total dry weight of the refractory composition,
or andalusite and up to about 40 % by weight chamotte, based on the total dry weight of the refractory composition.

2. The gunnable refractory composition according to claim 1, wherein the gunnable refractory composition has a permeability at 20°C, following drying at 50°C for 48 hours, of at least 250 x 10⁻¹⁶ m², for example, a permeability at 20°C, following drying at 50°C for 48 hours, of at least 2000 x 10⁻¹⁶ m².

3. The gunnable refractory composition according to claim 1 or 2, comprising from 80-95 % by weight bauxite, based on the total dry weight of the gunnable refractory composition.

4. The gunnable refractory composition according to claim 1, 2 or 3, comprising from 45-60 % by weight andalusite, based on the total dry weight of the gunnable refractory composition.

5. The gunnable refractory composition according to claim 4, comprising from 15-30 % by weight chamotte, based on the total dry weight of the gunnable refractory composition.

6. The gunnable refractory composition according to any preceding claim, comprising from 5-15 % by weight silicon carbide.

7. The gunnable refractory composition according to any preceding claim, comprising from 0.5-1.5 by weight of alkaline earth metal oxide and/or hydroxide.

8. The gunnable refractory composition according to any preceding claim, which comprises from 1-40 % by weight of water, for example, from 2-20 % by weight of water, for example, from 3-10 % by weight of water.

9. A gunnable refractory composition according to claim 8, further comprising from 0.1 to 5 wt. % of a stiffening and rebound modifier.

10. A gunnable refractory composition according to claim 9 or 10, wherein the stiffening and rebound modifier is one or more C₁-C₁₀ carboxylic acids or metal salt(s) thereof, for example, one or more C₁-C₄ carboxylic acids or metals salt(s) thereof.

11. The gunnable refractory composition according to any preceding claim, comprising from 5-15 % by weight spinel.

12. A method of installing a refractory lining, comprising: gunning a refractory composition according to any one of claims 1-11 to form a refractory lining, followed by setting and drying the lining, and optionally firing the lining.

13. A method according to claim 12, wherein said gunning is a dry gunning technique.

14. A refractory lining obtainable by the method according to any one of claims 12-13.

15. A precursor refractory composition comprising:
at least 50 % by weight of alumina, aluminosilicate, or mixtures thereof, based on the total dry weight of the gunnable refractory composition;
0.5 to 10 % by weight of alkaline earth metal oxide and/or hydroxide, based on the total dry weight of the gunnable refractory composition;
2 to 10 % by weight of silica having a surface area of at least 10 m²/g, based on the total dry weight of the gunnable refractory composition; and
no more than 0.5% by weight of cementitious binder, based on the total dry weight of the gunnable refractory composition;
wherein the precursor refractory composition is formable into a gunnable refractory composition according to claim 1 upon mixing with from 1-150 % by weight water, based on the total dry weight of the precursor refractory composition

## Patentansprüche

1. Spritzfähige Feuerfestzusammensetzung, umfassend
mindestens 50 Gew.-% Aluminiumoxyd, Aluminosilicat oder Gemische davon, auf der Basis des Gesamt-Trockengewichts der spritzfähigen Feuerfestzusammensetzung;
0,5 bis 10 Gew.-% Alkalierdmetalloxyd und/oder -hydroxyd, auf der Basis des Gesamt-Trockengewichts der spritzfähigen Feuerfestzusammensetzung;
1 bis 7 Gew.-% Siliciumoxyd mit einer Oberfläche von mindestens 10 m²/g, auf der Basis des Gesamt-Trockengewichts der spritzfähigen Feuerfestzusammensetzung;
nicht mehr als 0,5 Gew.-% Zementbinder, auf der Basis des Gesamt-Trockengewichts der spritzfähigen Feuerfestzusammensetzung; und
1 bis 150 Gew.-% Wasser, auf der Basis des Gesamt-Trockengewichts der spritzfähigen Feuerfestzusammensetzung;
**dadurch gekennzeichnet, dass** die spritzfähige Feuerfestzusammensetzung umfasst
entweder von 50 bis 95 Gew.-% Bauxit, auf der Basis des Gesamt-Trockengewichts der spritzfähigen Feuerfestzusammensetzung;
oder von 40 bis 90 Gew.-% Andalusit, auf der Basis des Gesamt-Trockengewichts der spritzfähigen Feuerfestzusammensetzung,
oder Andalusit und bis zu 40 Gew.-% Schamotte, auf der Basis des Gesamt-Trockengewichts der spritzfähigen Feuerfestzusammensetzung.

2. Spritzfähige Feuerfestzusammensetzung gemäß Anspruch 1, wobei die spritzfähige Feuerfestzusammensetzung eine Permeabilität bei 20°C, nach Trocknen bei 50°C während 48 Stunden, von mindestens 250 × 10⁻¹⁶ m² hat, zum Beispiel eine Permeabilität bei 20°C, nach Trocknen bei 50°C während 48 Stunden, von mindestens 2000 × 10⁻¹⁶ m².

3. Spritzfähige Feuerfestzusammensetzung gemäß Anspruch 1 oder 2, umfassend von 80 bis 95 Gew.-% Bauxit, auf der Basis des Gesamt-Trockengewichts der spritzfähigen Feuerfestzusammensetzung.

4. Spritzfähige Feuerfestzusammensetzung gemäß Anspruch 1, 2 oder 3, umfassend von 45 bis 60 Gew.-% Andalusit, auf der Basis des Gesamt-Trockengewichts der spritzfähigen Feuerfestzusammensetzung.

5. Spritzfähige Feuerfestzusammensetzung gemäß Anspruch 4, umfassend von 15 bis 30 Gew.-% Schamotte, auf der Basis des Gesamt-Trockengewichts der spritzfähigen Feuerfestzusammensetzung

6. Spritzfähige Feuerfestzusammensetzung gemäß irgendeinem vorhergehenden Anspruch, umfassend von 5 bis 15 Gew.-% Siliciumcarbid.

7. Spritzfähige Feuerfestzusammensetzung gemäß irgendeinem vorhergehenden Anspruch, umfassend von 0,5 bis 1,5 Gew.-% Alkalierdmetalloxyd und/oder -hydroxyd.

8. Spritzfähige Feuerfestzusammensetzung gemäß irgendeinem vorhergehenden Anspruch, die von 1 bis 40 Gew.-% Wasser umfasst, zum Beispiel von 2 bis 20 Gew.-% Wasser, zum Beispiel von 3 bis 10 Gew.-% Wasser.

9. Spritzfähige Feuerfestzusammensetzung gemäß Anspruch 8, zudem umfassend von 0,1 bis 5 Gew.-% eines Steifigkeits- und Rückschlagmodifizierers.

10. Spritzfähige Feuerfestzusammensetzung gemäß Anspruch 9 oder 10, wobei der Steifigkeits- und Rückschlagmodifizierer eines oder mehrere aus C₁-C₁₀-Carboxylsäuren oder Metallsalzen davon ist, zum Beispiel eines oder mehrere aus C₁-C₄-Carboxylsäuren oder Metallsalzen davon.

11. Spritzfähige Feuerfestzusammensetzung gemäß irgendeinem vorhergehenden Anspruch, umfassend von 5 bis 15 Gew.-% Spinell.

12. Verfahren zur Installation einer Feuerfestauskleidung, umfassend Spritzen einer Feuerfestzusammensetzung gemäß irgendeinem der Ansprüche 1 bis 11 zum Bilden einer Feuerfestauskleidung, gefolgt durch Abbinden und Trocknen der Auskleidung und wahlweise Brennen der Auskleidung.

13. Verfahren gemäß Anspruch 12, wobei das Spritzen eine Trockenspritztechnik ist.

14. Feuerfestauskleidung, erhältlich durch das Verfahren aus irgendeinem der Ansprüche 12 bis 13.

15. Feuerfestzusammensetzungsvorstufe, umfassend
mindestens 50 Gew.-% Aluminiumoxyd, Aluminosilicat oder Gemische davon, auf der Basis des Gesamt-Trockengewichts der spritzfähigen Feuerfestzusammensetzung;
0,5 bis 10 Gew.-% Alkalierdmetalloxyd und/oder -hydroxyd, auf der Basis des Gesamt-Trockengewichts der spritzfähigen Feuerfestzusammensetzung;
2 bis 10 Gew.-% Siliciumoxyd mit einer Oberfläche von mindestens 10 m²/g, auf der Basis des Gesamt-Trockengewichts der spritzfähigen Feuerfestzusammensetzung ;
nicht mehr als 0,5 Gew.-% Zementbinder, auf der Basis des Gesamt-Trockengewichts der spritzfähigen Feuerfestzusammensetzung;
wobei die Feuerfestzusammensetzungsvorstufe durch Einmischen von 1 bis 150 Gew.-% Wasser, auf der Basis des Gesamt-Trockengewichts der Feuerfestzusammensetzungsvorstufe, zu einer spritzfähigen Feuerfestzusammensetzung gemäß Anspruch 1 geformt werden kann.

## Revendications

1. Composition réfractaire qui se prête au gunitage comprenant :
au moins 50 pour cent en poids d'alumine, d'aluminosilicate, ou de leurs mélanges, à base du poids sec total de la composition réfractaire qui se prête au gunitage ;
de 0,5 à 10 pour cent en poids d'oxyde et/ou d'hydroxyde de métal alcalino-terreux, à base du poids sec total de la composition réfractaire qui se prête au gunitage ;
de 1 à 7 pour cent en poids de silice ayant une surface d'au moins 10 m²/g, à base du poids sec total de la composition réfractaire qui se prête au gunitage ;
non plus de 0,5 pour cent en poids d'un liant cimentaire, à base du poids sec total de la composition réfractaire qui se prête au gunitage ; et
de 1 à 150 pour cent en poids d'eau, à base du poids sec total de la composition réfractaire qui se prête au gunitage ;
**caractérisée en ce que** la composition réfractaire qui se prête au gunitage comprend
ou de 50 à 95 pour cent en poids de bauxite, à base du poids sec total de la composition réfractaire qui se prête au gunitage,
ou de 40 à 90 pour cent en poids d'andalousite, à base du poids sec total de la composition réfractaire qui se prête au gunitage,
ou de l'andalousite et jusqu'à 40 pour cent en poids de chamotte, à base du poids sec total de la composition réfractaire qui se prête au gunitage.

2. Composition réfractaire qui se prête au gunitage selon la revendication 1, dans laquelle la composition réfractaire qui se prête au gunitage a une perméabilité à 20°C, après séchage à 50°C pendant 48 heures, d'au moins 250 × 10⁻¹⁶ m², par exemple une perméabilité à 20°C, après séchage à 50°C pendant 48 heures, d'au moins 2000 × 10⁻¹⁶ m².

3. Composition réfractaire qui se prête au gunitage selon la revendication 1 ou 2, comprenant de 80 à 95 pour cent en poids de bauxite, à base du poids sec total de la composition réfractaire qui se prête au gunitage.

4. Composition réfractaire qui se prête au gunitage selon la revendication 1, 2 ou 3, comprenant de 45 à 60 pour cent en poids d'andalousite, à base du poids sec total de la composition réfractaire qui se prête au gunitage.

5. Composition réfractaire qui se prête au gunitage selon la revendication 4, comprenant de 15 à 30 pour cent en poids de chamotte, à base du poids sec total de la composition réfractaire qui se prête au gunitage

6. Composition réfractaire qui se prête au gunitage selon quelconque revendication précédente, comprenant de 5 à 15 pour cent en poids de carbure de silicium.

7. Composition réfractaire qui se prête au gunitage selon quelconque revendication précédente, comprenant de 0,5 à 1,5 pour cent en poids d'oxyde et/ou d'hydroxyde de métal alcalino-terreux.

8. Composition réfractaire qui se prête au gunitage selon quelconque revendication précédente, qui comprend de 1 à 40 pour cent en poids d'eau, par exemple de 2 à 20 pour cent en poids d'eau, par exemple de 3 à 10 pour cent en poids d'eau.

9. Composition réfractaire qui se prête au gunitage selon la revendication 8, comprenant en plus de 0,1 à 5 pour cent solidifiant ou d'un agent de rebond.

10. Composition réfractaire qui se prête au gunitage selon la revendication 9 ou 10, dans laquelle le solidifiant ou l'agent de rebond est un ou plusieurs acides carboxyliques C₁-C₁₀ ou leur(s) sel(s) métalliques, par exemple un ou plusieurs acides carboxyliques C₁-C₄ ou leur(s) sel(s) métalliques.

11. Composition réfractaire qui se prête au gunitage selon quelconque revendication précédente, comprenant de 5 à 15 pour cent en poids de spinelle.

12. Procédé pour installer un revêtement réfractaire, comprenant : gunitage d'une composition réfractaire selon l'une quelconque des revendications 1 à 11 pour former un revêtement réfractaire, suivi par la prise et le séchage du revêtement, et éventuellement la cuisson du revêtement.

13. Procédé selon la revendication 12, dans lequel ledit gunitage est une technique de gunitage à sec.

14. Revêtement réfractaire pouvant être obtenu par le procédé selon l'une quelconque des revendications 12 à 13.

15. Précurseur d'une composition réfractaire, comprenant :
au moins 50 pour cent en poids d'alumine, d'aluminosilicate, ou de leurs mélanges, à base du poids sec total de la composition réfractaire qui se prête au gunitage ;
de 0,5 à 10 pour cent en poids d'oxyde et/ou d'hydroxyde de métal alcalino-terreux, à base du poids sec total de la composition réfractaire qui se prête au gunitage ;
de 2 à 10 pour cent en poids de silice ayant une surface d'au moins 10 m²/g, à base du poids sec total de la composition réfractaire qui se prête au gunitage ; et
non plus de 0,5 pour cent en poids d'un liant cimentaire, à base du poids sec total de la composition réfractaire qui se prête au gunitage ;
où la précurseur de composition réfractaire peut être formé en une composition réfractaire qui se prête au gunitage selon la revendication 1 au mélange de 1 à 150 pour cent en poids d'eau, à base du poids sec total du précurseur de composition réfractaire.
